Europäisches Patentamt

European Patent Office

Office européen des brevets

(19)

(11) Veröffentlichungsnummer: **0 266 655 B1**

# (12) EUROPÄISCHE PATENTSCHRIFT

(45) Veröffentlichungstag der Patentschrift: **24.07.91**

(51) Int. Cl.⁵: **B29C 45/17**

(21) Anmeldenummer: **87115718.6**

(22) Anmeldetag: **27.10.87**

(54) Wechselvorrichtung für den Schneckenzylinder einer Spritzgiessmaschine.

(30) Priorität: **04.11.86 DE 3637569**

(43) Veröffentlichungstag der Anmeldung:
**11.05.88 Patentblatt 88/19**

(45) Bekanntmachung des Hinweises auf die
Patenterteilung:
**24.07.91 Patentblatt 91/30**

(84) Benannte Vertragsstaaten:
**AT BE CH DE ES FR GB GR IT LI LU NL SE**

(56) Entgegenhaltungen:
**EP-A- 0 069 221**
**EP-A- 0 198 364**

**KUNSTSTOFFE, Band 73, Nr. 10, Oktober 183,
Seiten 559-563, München, DE; G.R. LANGEK-
KER et al.: "Automatisierungen im Spritzgiessbetrieb"**

(73) Patentinhaber: **Battenfeld Kunststoffmaschinen Ges.m.b.H.
Wiener-Neustädter-Strasse 81
AT-2542 Kottingbrunn(AT)**

(72) Erfinder: **Heindl, Friedrich
Dörflergasse 43
A-2500 Baden(AT)**
Erfinder: **Reiser, Rudolf, Dipl.-Ing.
Auf der Alm 6
A-2500 Baden(AT)**
Erfinder: **Bleier, Harald
Schulgasse 4/3/12
A-2700 Wiener Neustadt(AT)**

(74) Vertreter: **Müller, Gerd et al
Patentanwälte HEMMERICH-
MÜLLER-GROSSE-POLLMEIER-MEY Hammerstrasse 2
W-5900 Siegen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Wechselvorrichtung für den Schneckenzylinder einer Spritzgießmaschine, bei welcher die Schnecke des Schneckenzylinders mit der maschinenseitigen Antriebseinheit in lösbarer Kupplungsverbindung steht und dabei der Schneckenzylinder samt Schnecke zum Lösen und Ausrücken der Kupplungsverbindung im wesentlichen quer zu seiner Längsrichtung relativ zur Spritzgießmaschine verlagerbar ist, bei welcher symmetrisch und parallelachsig zur Längsmittelebene der Spritzgießmaschine zwei Hydraulik-Zylinder mit Abstand nebeneinander angeordnet sind, die durch eine Quertraverse miteinander in Verbindung stehen, wobei von den beiden Hydraulik-Zylindern und der Quertraverse ein sich an die Antriebseinheit nach vorne anschließender Freiraum begrenzt ist, und bei welcher dieser Freiraum eine sowohl nach vorne und nach hinten als auch an einer Längsseite offene Ausricht-Aufnahme bildet, in der der Schneckenzylinder in seiner Kupplungsstellung mit der Antriebseinheit fixierbar und/oder verriegelbar ist.

Eine derartige Wechselvorrichtung ist durch die EP 198 364 A2 bekannt. Bei Spritzgießmaschinen zur Verarbeitung thermoplastischer Kunststoffmassen besteht verhältnismäßig oft, und zwar hauptsächlich bei der Umstellung des zu verarbeitenden Kunststoffmaterials sowie auch beim Farbstoffwechsel, die Notwendigkeit, die Schnekkenzylinder derselben auszutauschen.

Üblicherweise wird dabei der Schneckenzylinder von den Materialzuführeinrichtungen der Spritzgießmaschine sowie auch von der maschinenseitigen Antriebseinheit für die Schnecke getrennt und anschließend durch Benutzung eines Hebezeuges nach oben aus der Spritzgießmaschine ausgebaut.

Die für den Wechsel der Schneckenzylinder notwendigen Arbeitsvorgänge und/oder Manipulationen sind dabei recht aufwendig und erfordern daher relativ lange Stillstandszeiten der betreffenden Spritzgießmaschine mit dem hieraus notwendigerweise resultierenden Produktionsausfall.

Zur Beseitigung dieser Unzulänglichkeiten liegt der Erfindung die Aufgabe zugrunde, eine Wechselvorrichtung für den Schneckenzylinder einer Spritzgießmaschine zu schaffen, welche die durchzuführenden Aus- und Einbauarbeiten wesentlich erleichtert und dadurch die Stillstandszeiten der Spritzgießmaschine vermindert.

Erreicht wird das gesteckte Ziel erfindungsgemäß grundsätzlich durch die im Kennzeichen des Anspruchs 1 angegebenen Merkmale, nämlich dadurch,
daß der Freiraum bzw. die Ausricht-Aufnahme nach unten offen ist, also die die Hydraulik-Zylinder miteinander verbindende Quertraverse an der oberen Längsseite der Hydraulik-Zylinder angreift.

Aus- und Einbau der Schneckenzylinder können dadurch nach unten erfolgen, d.h., die Materialzuführeinrichtungen können grundsätzlich in ihrer vorgegebenen Position an der Spritzgießmaschine verbleiben, müssen also für einen Wechsel der Schneckenzylinder nicht entfernt werden.

Durch die vorgesehenen Maßnahmen ist der Schneckenzylinder auch jederzeit ohne Behinderung durch die Hydraulik-Zylinder über seine ganze Länge hinweg an einer Längsseite zugänglich, so daß die notwendigen Austauscharbeiten zügig und problemlos durchgeführt werden können. Dabei ist er jedoch in seiner Einbaulage exakt relativ zur maschinenseitigen Antriebseinheit sowie auch zu den Materialzuführeinrichtungen ausgerichtet, wodurch ein dauerhaft einwandfreier Betrieb gewährleistet werden kann.

Besonders bewährt hat sich dabei eine Ausbildung, bei welcher gemäß Anspruch 2 das hintere Ende des Schneckenzylinders von einem Kühlblock umgeben ist, der eine dem Freiraum bzw. der Ausricht-Aufnahme angepaßte, prismatische Umrißform aufweist.

Schneckenzylinder und Kühlblock können in diesem Falle als Baueinheit behandelt werden und gewährleisten miteinander im eingebauten Zustand das ordnungsgemäße Zusammenwirken des Schneckenzylinders mit der maschinenseitigen Antriebseinheit.

Eine besonders wesentliche, weitere Ausgestaltung der erfindungsgemäßen Wechselvorrichtung wird nach Anspruch 3 darin gesehen, daß die Spritzgießmaschine unterhalb der Hydraulik-Zylinder und des Schneckenzylinders in ihrem Grundgestell einen Lichtraum aufweist, dessen freie Höhe mindestens der größten Bauhöhe eines mit einem Kühlblock vereinigten Schnekkenzylinders entspricht, und daß im Grundgestell ein Hubwerk untergebracht ist, mittels dessen jeder Schneckenzylinder samt Kühlblock zwischen dem Lichtraum und dem Freiraum bzw. der Ausricht-Aufnahme innerhalb der Spritzgießmaschine höhenverlagerbar ist.

Diese Maßnahmen bieten die Möglichkeit für einen vollautomatischen Wechsel der Schneckenzylinder ohne zusätzliche äußere Hilfsaggregate, weil alle für einen Wechselzyklus notwendigen Bewegungen miteinander koordinierbar sind und dann - nach Auslösung des Wechselvorgangs bzw. durch Knopfdruck - völlig selbsttätig ablaufen können.

Dem vollautomatischen Wechsel der Schnekkenzylinder ist es im besonderen Maße auch dienlich, wenn gemäß Anspruch 4 im Lichtraum oberhalb des Grundgestells ein Lagermagazin vorgesehen ist, welches nebeneinander mindestens Lagerblöcke für zwei Schnecken-Zylinder mit Kühlblock aufweist, wobei diese Lagerplätze abwechselnd in den Wirkbereich des Hubwerkes und unter den Freiraum bzw. die Ausricht Aufnahme stellbar sind. Der jeweils in der Spritzgießmaschine befindliche Schneckenzylinder kann dann zunächst in den freien Lagerplatz des Lagermagazin abgesenkt werden. Daraufhin wird das Lagermagazin so verfahren, daß der zweite, mit einem weiteren Schneckenzylinder besetzte Lagerplatz über das Hubwerk gelangt und dann mit dessen Hilfe in den Freiraum bzw. in die Ausricht-Aufnahme zwischen die beiden Hydraulik-Zylinder gebracht werden kann.

Bewährt hat sich nach der Erfindung auch eine Ausbildung, die sich nach Anspruch 5 dadurch auszeichnet, daß das Lagermagazin aus einem mittleren Längsträger und zwei seitlichen Längswangen sowie diese miteinander auf vorgegebenen Abstand verbindenden Querrohren besteht, wobei die Querrohre über Führungsbuchsen abegrenzt verfahrbar auf vom Grundgestell getragenen Querholmen lagern und das Lagermagazin über Druckmittelzylinder zwischen zwei Endstellungen im Grundgestell querverfahrbar ist.

Die Schneckenzylinder können nach Anspruch 6 mittels seitlichen Stützgliedern, z.B Rollen, jeweils auf den mittleren Längsträger und einer der seitlichen Wangen abgesetzt sowie auf diesen in Längsrichtung verfahren werden, wobei die Schneckenzylinder in einer vorgegebenen Längsposition relativ zum Längsträger und zu den Längswangen fixierbar sind, um über das Hubwerk in die ordnungsgemäße Einbauposition zu gelangen.

Eine vorteilhafte Weiterbildung der erfindungsgemäßen Wechselvorrichtung wird nach Anspruch 7 erreicht, wenn das Hubwerk eine Tragplattform für einen Schneckenzylinder aufweist, diese Tragplattform mit Eingriffsöffnungen für an den Schneckenzylindern befindliche Ausricht- und Kupplungszapfen versehen ist und sich an der Tragplattform eine Kupplungsvorrichtung zum Festlegen der Ausricht- und Kupplungszapfen befindet.

Es erweist sich für den vollautomatischen Wechsel der Schnekkenzylinder in der Spritzgießmaschine noch als besonders wichtig, daß gemäß Anspruch 8 das Lagermagazin für jeden Schneckenzylinder Kupplungsmittel zur Heizenergie-Zuführung sowie auch für jeden Kühlblock Kupplungsmittel zur Kühlenergie-Zuführung aufweist. Auf diese Art und Weise läßt sich sicherstellen, daß während der gesamten Wartezeit des jeweils in einer Warteposition befindlichen Schneckenzylinders sowie des zugehörigen Kühlblocks eine exakte Vorbestimmung der jeweils nötigen Betriebstempeeratur erreicht wird. Unmittelbar nach Durchführung des Wechselvorganges hat dann der Schneckenzylinder bereits an allen Stellen die jeweils benötigte Betriebstemperatur, so daß der Weiterbetrieb der Spritzgießmaschine ohne jegliche Unterbrechung eingeleitet werden kann.

Nach Anspruch 9 wird ein Weiterbildungsmerkmal der Erfindung auch noch darin gesehen, daß einerseits im Freiraum bzw. in der Ausricht-Aufnahme und andererseits am Kühlblock des Schneckenzylinders quer zu dessen Längsachse gerichtete, formschlüssig ineinandergreifende Paßführungen vorgesehen und diesen zusätzlich Riegelelemente zugeordnet sind.

Mit Hilfe der Paßführungen werden die Schneckenzylinder ordnungsgemäß aus der und auch in die funktionsnotwendig exakte Einbauposition geführt, wobei die Lagensicherung des jeweils in der Einbauposition befindlichen Schneckenzylinders durch die Riegelelemente gesichert wird.

Nach der Erfindung reicht es für einen ordnungsgemäßen Betrieb der Spritzgießmaschine ohne weiteres aus, wenn gemäß Anspruch 10 die Paßführungen und die Riegelelemente lediglich einseitig im Bereich des Freiraums bzw. der Ausricht-Aufnahme vorgesehen sind.

Als Riegelelemente lassen sich in vorteilhafter Weise nach Anspruch 11 eine im Querschnitt etwa T-förmige Nut am Kühlblock und ein an einem Hydraulik-Zylinder querverschiebbar geführter Kopfbolzen miteinander in Wirkverbindung bringen, wobei nach Anspruch 12 dieser Kopfbolzen unterhalb seines Kopfes einen Bund aufweist, der als Riegelglied in eine angepaßte Erweiterung der T-förmigen Nut am Kühlblock einrückbar ist.

Bewährt hat es sich ferner, wenn nach Anspruch 13 der Kopfbolzen in Spannrichtung unter der Wirkung von Federelementen steht, während er in Freigaberichtung durch einen Druckmittelzylinder beaufschlagbar ist. Diese Ausgestaltung hat den Vorteil, daß die Riegelelemente in jedem Falle selbsttätig miteinander in Riegeleingriff gelangen und auch darin durch die Federelemente gehalten werden. Ein Druckausfall am Druckmittelzylinder kann also nicht dazu führen, daß sich der Schneckenzylinder in unerwünschter Weise aus seiner Einbauposition in der Spritzgießmaschine löst.

Eine Wechselvorrichtung, bei welcher das hintere Ende der Schneckenwelle des Schneckenzylinders mit der Welle der Antriebseinheit durch quer zu ihrer Längsachse in und außer Kupplungseingriff schiebbare Mitnehmerklauen, z.B. von T-förmiger und C-förmiger Gestalt, in lösbare Antriebsverbindung bringbar sind, hat es sich nach der Erfindung gemäß Anspruch 14 in besonderer Weise bewährt, daß die Mitnehmerklaue der Welle der Antriebseinheit relativ zu deren Gehäuse sowie die Mitnehmerklaue der Schneckenwelle relativ zum Schneckenzylinder in einer vorbestimmten, der offenen Längsseite des Freiraumes bzw. der Ausricht-Aufnahme zugeordneten Drehwinkelstellung stillsetzbar und/oder feststellbar sind.

Diese Maßnahmen stellen sicher, daß ohne irgendwelche zusätzlichen Manipulationen auch die Kupplungsverbindung der Schneckenwelle mit der Antriebseinheit unmittelbar durch den Aus- und Einbauvorgang des jeweiligen Schneckenzylinders problemlos gelöst und wieder hergestellt wird.

Nach Anspruch 15 ist dabei vorgesehen, daß die Drehwinkelstellung der Welle der Antriebseinheit durch elektrische Abtastung und Bremsung festlegbar ist, während zwischen der Schneckenwelle und dem Schneckenzylinder eine im Sperrsinne federbelastete mechanische Rastkupplung sitzt, die entgegen der Federkraft bei im Freiraum bzw. in der Ausricht-Aufnahme fixiertem und/oder verriegeltem Schneckenzylinder ausgerückt ist. Dabei kann nach Anspruch 16 die Rastkupplung aus einem am Schneckenzylinder quer zu dessen Längsachse verschiebbar geführten, durch Federelemente in Richtung auf die Längsachse zu vorgespannten Rastbolzen und einer diesem zugeordneten, radialen Rastbohrung in der Schneckenwelle bestehen, wobei der Rastbolzen durch einen Ausrückanschlag im Freiraum bzw. an der Ausrichtaufnahme für den Schneckenzylinder aus der Rastbohrung verdrängbar ist, sobald der Schneckenzylinder in den Freiraum bzw. die Ausricht-Aufnahme zwischen den beiden Spritzzylindern eingerückt ist.

In der Zeichnung ist der Gegenstand der Erfindung in einem Ausführungsbeispiel dargestellt und zwar zeigen

| Figur 1 | in prinzipieller Seitenansicht den Grundaufbau einer Spritzgießmaschine, |
| Figur 2 | die Spritzgießmaschine nach Fig. 1 teils in Stirnansicht und teils im Schnitt, |
| Figur 3 | den in Fig. 1 mit III gekennzeichneten Bereich in größerem Maßstab, |
| Figur 4 | den in Fig. 2 IV gekennzeichneten Bereich in größerem Maßstab, |
| Figur 5 | den in Fig. 1 mit V gekennzeichnetn Bereich in größerem Maßstab und |
| Figur 6 | einen Schnitt durch die Anordnung in Fig. 5 entlang der Linie VI-VI. |

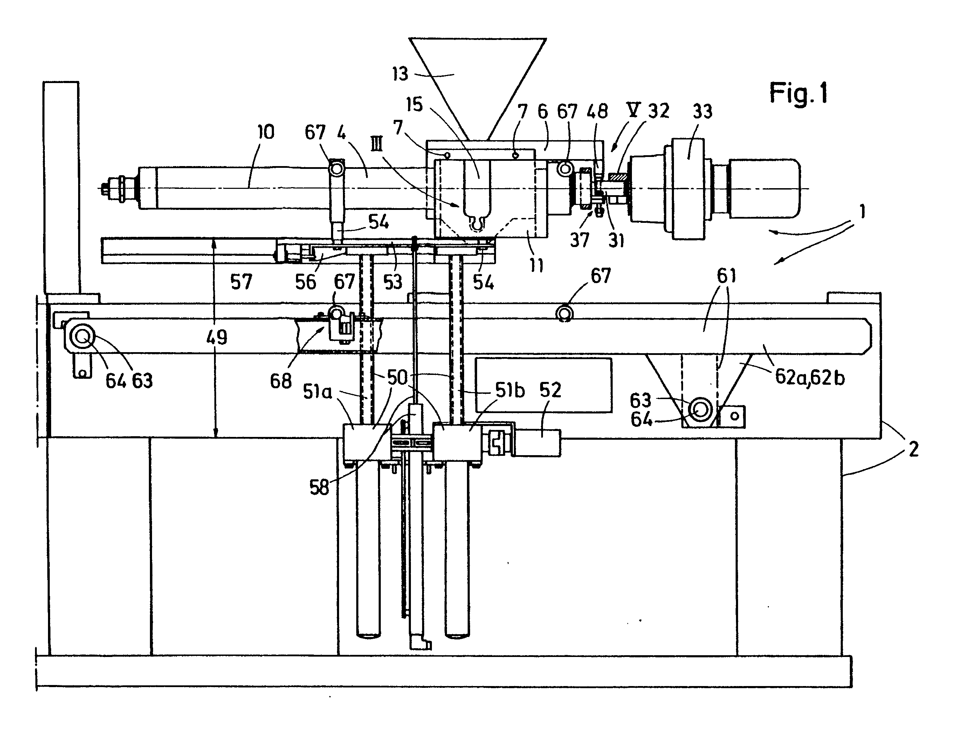

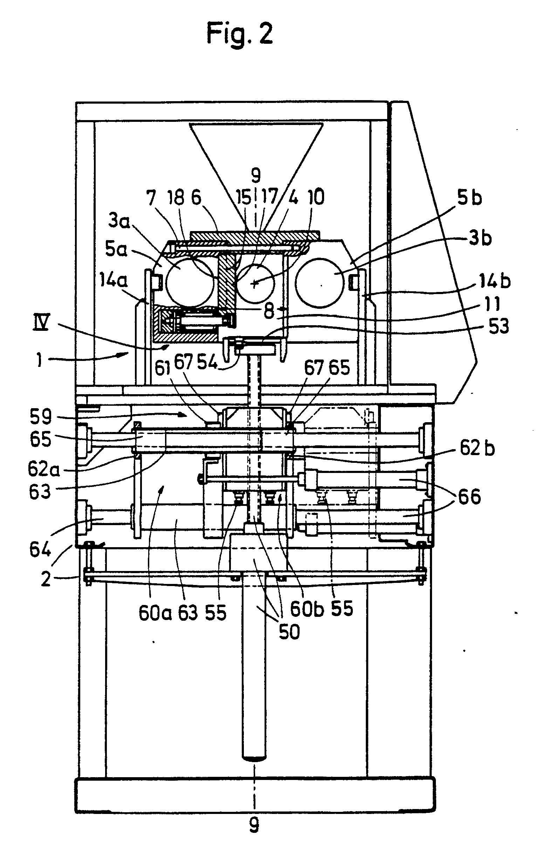

Die in den Fig. 1 und 2 gezeigte Spritzgießmaschine 1 hat ein Grundgestell 2, das zwei Hydraulik-Zylinder 3a und 3b sowie zwischen diesen den Schneckenzylinder 4 trägt.

Jeder der beiden Hydraulik-Zylinder 3a und 3b ist dabei in einem Rahmenkörper 5a bzw. 5b aufgenommen, wobei diese beiden Rahmenkörper 5a und 5b durch eine Quertraverse und Schrauben 7 unter Aufrechterhaltung eines seitlichen Abstands 8 miteinander verbunden sind.

Die beiden Hydraulik-Zylinder 3a und 3b sind dabei über ihre Rahmenkörper 5a und 5b symmetrisch zur vertikalen Längsmittelebene 9-9 der Spritzgießmaschine 1 angeordnet, während der Schneckenzylinder 4 mit seiner Längsache 10 auf dieser Längsmittelebene 9-9 liegt.

Das hintere Ende des Schneckenzylinders 4 ist in einem Kühlblock 11 aufgenommen, welcher den Bereich der sogenannten Einzugszone des Schneckenzylinders 4 umgibt, in welcher die Materialzuführung, bspw. durch den Einfülltrichter 13 in den Schneckenzylinder 4 erfolgt.

Der Einfülltrichter 13 ist zu diesem Zweck beim gezeigten Ausführungsbeispiel auf der Quertraverse 6 montiert, welcher die beiden Rahmenkörper 5a und 5b miteinander verbindet, in denen die beiden Hydraulik-Zylinder 3a und 3b zu beiden Seiten des Schneckenzylinders 4 aufgenommen sind.

Da die Quertraverse 6 den Träger für den Einfülltrichter 13 bildet, verbindet sie die beiden Rahmenkörper 5a und 5b jeweils an ihren oberen Enden miteinander, dergestalt, daß der Abstandsbereich 8 zwischen den beiden Rahmenkörpern 5a und 5b nach hinten, nach vorne oder nach unten offen bleibt und nur nach oben hin, durch die Quertraverse, geschlossen ist.

Der von den beiden Rahmenkörpersn 5a und 5b sowie der Quertraverse 6 gebildete Bauteil ruht in zwei Stützböcken, die wiederum auf dem Grundgestell 2 der Spritzgießmaschine 1 sitzen und an den voneinander abgewendeten Längsseiten der Rahmenkörper 5a und 5b liegen sowie mit diesen, bspw. über ineinandergreifende Längsführungselemente, in Halteverbindung stehen.

Mittelbar werden daher von den Stützböcken 14a und 14b auch die beiden Hydraulik-Zylinder 3a und 3b gehalten und horizontal ausgerichtet.

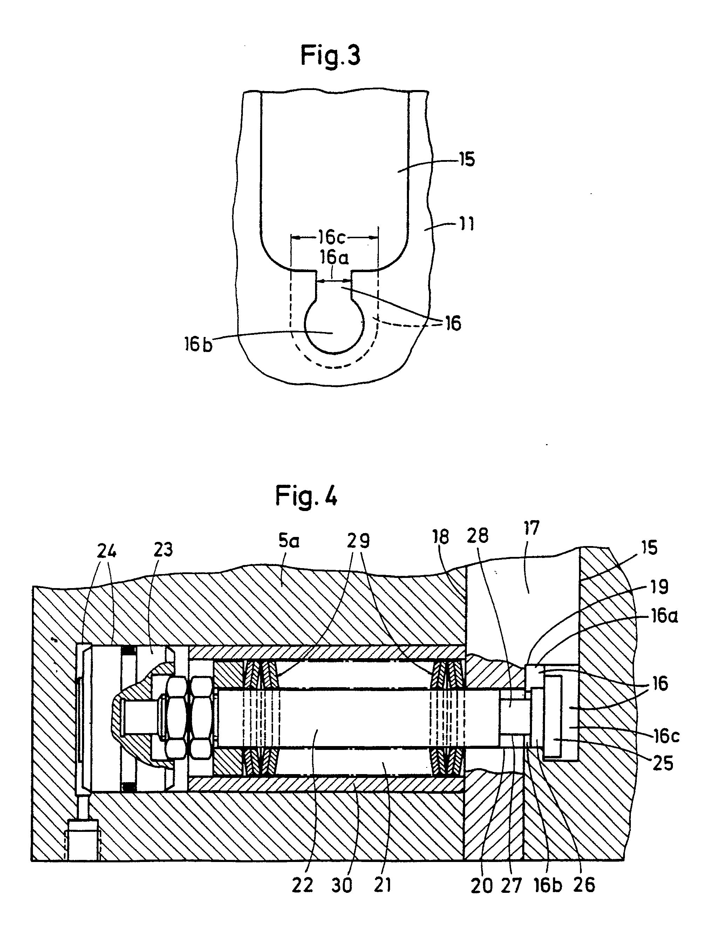

In einer seiner Längsseitenflächen weist der Kühlblock 11 eine Paßnut 15 auf, die sich im wesentlichen rechtwinklig zur Längsachse 10 des Schneckenzylinders 4 erstreckt und an ihrem unteren Ende in eine schmalere Nut 16 mit etwa T-förmig hinterschnittenem Querschnitt übergeht. Die Paßnut 15 und die nach unten daran anschließende Nut 16 mit T-förmig hinterschnittenem Querschnitt sind in den Fig. 3 und 4 der Zeichnung deutlicher zu sehen als in den Fig. 1 und 2.

Der Paßnut 15 ist ein Paßkeil 17 zugeordnet, welcher über einen Teil seiner Dicke in einer Nut 18 aufgenommen ist, die sich in der inneren Seitenfläche des Rahmenkörpers 5a befindet und sich in dieser nahezu über die ganze Höhe, nämlich bis zur Unterseite der Quertraverse 6 hin erstreckt.

Dort wo die Paßnut 15 in die schmalere, T-förmig hinterschnittende Nut 16 übergeht, ist der Paßkeil 17 mit einem Absatz 19 versehen, dergestalt, daß er über den Längenbereich der Nut 16 hinweg bis zum unteren Ende des Rahmenkörpers 5a hin nur einer Dickenabmessung aufweist, welcher der Tiefe der Nut 18 im Rahmenkörper 5a entspricht.

Der schlitzartig offene schmale Profilbereich 16a der T-förmig hinterschnittenen Nut 16 läuft in seinem unteren Ende in ein kreisbogenförmig begrenzte Erweiterung 16b aus.

Unterhalb des Absatzes 19 ist der Paßkeil 17 mit einem Durch gangsloch 20 versehen, das sich in Achsfluchtlage mit einer Zylinderausnehmung 21 im Rahmenkörper 5a befindet. In der Zylinderausnehmung 21 und dem Durchgangsloch 20 ist koaxial verschieblich ein Bolzen 22 geführt, der an seinem hinteren Ende einen Kolben 23 trägt, der begrenzt innerhalb eines Zylinderraums 24 verschiebbar geführt ist. An dem dem Kolben 23 gegenüberliegenden Ende, welches aus dem Durchgangsloch 20 des Paßkeiles herausragt hat der Bolzen 22 zunächst einen flachen Kopfteil 25 mit vergrößertem Durchmesser, daran anschließend eine Schulter 26 mit dem Bolzen 22 entsprechendem Durchmesser und daran anschließend eine Umfangseindrehung 27, in deren Bereich ein Schaftteil 28 mit gegenüber dem Bolzen 22 verringertem Durchmesser ausgebildet ist.

Innerhalb der Zylinderausnehmung 21 ist dem Bolzen 22 ein Tellerfederpaket 29 zugeordnet, das von einer Hülse 30 umgeben ist. Dieses Tellerfederpaket 29 stützt sich dabei einerseits gegen die Rückseite des Paßkeils 17 ab und wirkt andererseits am kolbenseitigen Ende auf den Bolzen 22 ein, so daß es diesen in die Zylinderausnehmung 21 hineinzuziehen sucht.

Entgegen der Kraftwirkung des Tellerfederpaketes 29 kann der Bolzen 22 jedoch in Richtung aus der Zylinderausnehmung 21 heraus verschoben werden, indem auf den Kolben 23 innerhalb des Zylinderraums 24 ein Druckmittel, bspw. Hydraulikflüssigkeit zur Einwirkung gebracht wird.

Der Abstandsbereich 8 zwischen den beiden als Träger für die Hydraulik-Zylinder 3a und 3b dienenden Rahmenkörpern 5a und 5b bildet einen Freiraum bzw. eine Ausricht-Aufnahme für den das hintere Ende das hintere Ende des Schneckenzylinders 4 umgebenden Kühlblock 11, wenn der Schneckenzylinder 4 zusammen mit dem Kühlblock 11 von unten her in den Abstandsbereich 8 eingeführt und nach oben bis zum Anschlag gegen die Quertraverse 6 hochgefahren wird. Dabei kommt dann der Paßkeil 17 des Rahmenkörpers 5a mit der Paßnut 15 im Kühlblock 11 zum Eingriff und stellt dadurch eine verkantungsfreie Halterung des Kühlblockes 11 und damit auch des Schneckenzylinders 4 innerhalb des Freiraumes bzw. der Ausricht-Aufnahme sicher.

Damit der Kühlblock 11 bis zum Anschlag nach oben gegen die Quertraverse 6 geschoben werden kann, muß der mit dem Bolzen 22 an seinem hinteren Ende verbundene Kolben 23 im Zylinder 24 mit Druckmittel, bspw. Druckflüssigkeit beaufschlagt werden, um die Wirkung des Tellerfederpaktes 29 zu überwinden und dadurch den Kopfteil 25 bis gegen den Boden der Paßnut 15 im Kühlblock 11 vorzuschieben. Kopfteil 25 und Schulter 26 des Bolzens 22 kommen dann in einem Bereich der Paßnut 15 zu liegen, an welchen sich der breite Profilbereich 16c der T-förmig hinterschnittenen Nut 16 nach unten anschließt. Der im Durchmesser verringerte Schaftteil 28 des Bolzens 22 hat dann gleichzeitig eine Lage, die dem schmaleren Profilbereich 16a der T-förmig hinterschnittenen Profilnut 16 zugeordnet ist.

Beim Hochschieben des den Schneckenzylinder 4 enthaltenden Kühlblocks 11 gegen die Quertraverse 6 kann auf diese Art und Weise der Bolzen 22 mit Kopfteil 25, Schulter 26 und Schaftteil 28 in die T-förmig hinterschnittene Profilnut 16 des Kühlblocks 11 zum Eingriff gelangen, und zwar dergestalt, daß die Bolzenachse Deckungslage mit der Achse der kreisbogenförmigen Erweiterung 16b einnimmt. Wird nunmehr der Druckmitteldruck im Zylinderraum 24 auf den Kolben 23 weggenommen, dann kann das Tellerfederpaket 29 wieder entspannen. Die Folge hiervon ist, daß die Schulter 26 des Bolzens in die kreisförmige Erweiterung 16b der im Querschnitt T-förmig hinterschnittenen Nut 16 einrückt und dadurch eine formschlüssige Verriegelung des Kühlblockes 11 im Abstandsbereich 8 zwischen den beiden Rahmenkörpern 5a und 5b herbeiführt. Über den Kühlblock 11 ist daher der Schneckenzylinder 4 innerhalb des von den beiden Rahmenkörpern 5a und 5b sowie der oberen Quertraverse 6 begrenzten Freiraumes bzw. der hiervon gebildeten Ausricht-Aufnahme sicher fixiert.

In der eben erwähnten, ordnungsgemäßen Einbaulage des Kühlblockes 11 und damit auch des Schneckenzylinders 4 ist es wichtig, daß die Schneckenwelle 31 der im Schneckenzylinder 4 drehbar gelagerten (nicht gezeigten) Schnecke auch eine einwandfreie Kupplungsverbindung mit der Antriebswelle 32 der Antriebseinheit 33 aufweist, die ebenfalls auf dem Grundgestell 2 der Spritzgießmaschine 1 montiert ist.

Um das zu ermöglichen, weist die Schneckenwelle 31 an ihrem hinteren Ende ein etwa T-förmiges Kupplungsprofil 34 auf. Dieses kann im einfachsten Falle dadurch gebildet werden, daß an zwei sich diametral gegenüberliegenden Umfangsflächen der Schneckenwelle 31 zwei segmentartige Umfangsbereiche weggefräst und an diesen Stellen dann Abflachungen gebildet werden.

Andererseits wird die Antriebswelle 32 der Antriebseinheit 33 im Bereich ihres freien Endes so mit einseitig radial geöffneten Ausfräsungen 36 versehen, daß dort ein im wesentlichen C-förmig gestaltetes Eingriffsprofil entsteht, welches komplementär zu dem T-förmigen Kupplungsprofil 34 an der Schneckenwelle 31 paßt.

Das Ein- und Ausrücken des Kupplungsprofils 34 und der Ausfräsungen 36 ist nur durch eine Verlagerung des Schneckenzylinders 4 quer zu seiner Längsachse 10 gegenüber der Antriebseinheit 33 möglich, also durch eine Verlagerungsbewegung, wie sie auch für den Ein- und Ausbau des Schneckenzylinders 4 mit dem zugeordneten Kühlblock 11 im Abstandsbereich 8 zwischen den beiden Rahmenkörpern 5a und 5b vorgenommen werden muß.

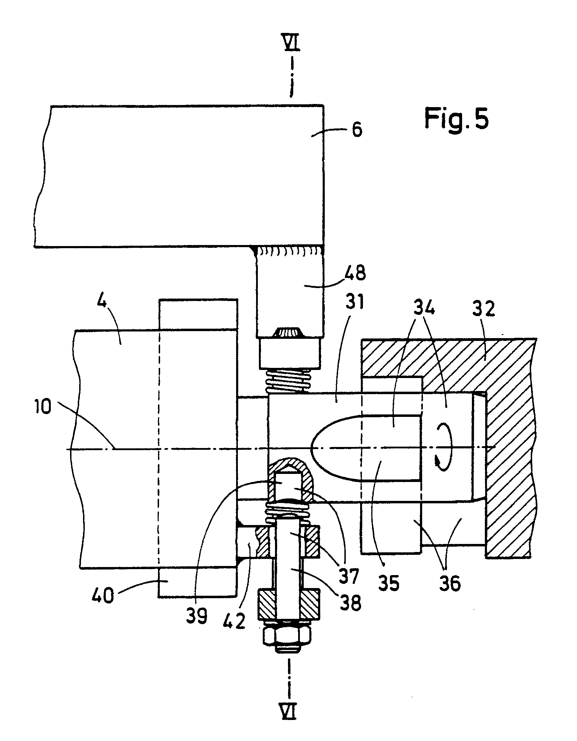

Voraussetzung ist dabei allerdings, daß auch das T-förmige Kupplungsprofil 34 der Schneckenwelle 31 sowie die radiale Öffnungsseite der Ausfräsungen 36 in der Antriebswelle 32 der Antriebeinheit 33 eine exakt nach abwärts gerichtete Ausrichtlage einnehmen, wie sie in Fig. 5 der Zeichnung zu sehen ist.

Damit nun diese bestimmte Ausrichtlage der Kupplungsteile 34 und 36 bei jedem Stillstand der Schneckenwelle 31 und der Antriebseinheit 33 exakt angefahren wird, ist der Antriebseinheit 33 eine elektrische Abtastung mit Bremssteuerung zugeordnet, durch welche die Antriebswelle 32 immer in einer ganz bestimmten Winkellage relativ zum Gehäuse der Antriebseinheit 33 zum Stillstand gelangt.

Die entsprechend exakte Winkellage der Schneckenwelle 31 relativ zum Schneckenzylinder 4 wird durch eine mechanische Rastkupplung 37 herbeigeführt.

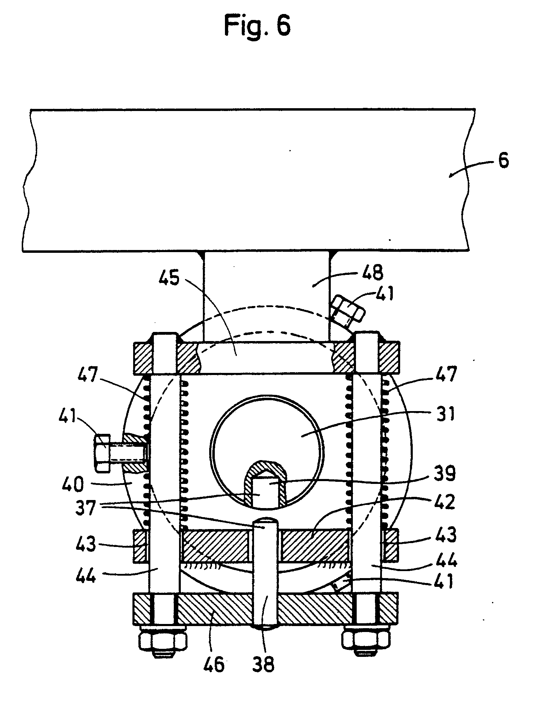

Diese mechanische Rastkupplung 37 besteht dabei einerseits aus einem in Richtung seiner Längsachse verschiebbar am Schneckenzylinder 4 geführten und radial in Richtung gegen die Längsachse 10 des Schneckenzylinders 4 unter Federwirkung gehaltenen Rastbolzen 38 sowie einer radialen Rastbohrung 39 in der Schneckenwelle 31, wie das aus den Fig. 5 und 6 deutlich hervorgeht.

Auf dem Umfang des Schneckenzylinders 4 ist ein Ringkörper 40 über, mehrere bspw. drei Klemmschrauben 41 drehfest fixiert. An diesem Ringkörper 40 ist dabei eine Brücke 42 so befestigt, daß sie auf einer Sekante zum Ringkörper 40 liegt. Nahe jedem ihrer Enden weist dabei die Brücke 42 eine Durchgangsbohrung 43 auf, welche von einem Bolzen 44 durchsetzt ist. Beide Bolzen 44 sind sowohl an ihren oberen Enden als auch an ihren unteren Enden jeweils durch eine Querplatte 45 und 46 fest miteinander verbunden, wobei die untere Querplatte 46 den Rastbolzen 38 trägt. Jeder der beiden Bolzen 44 ist darüber hinaus noch von einer Druckfeder 47 umgeben, die sich einerseits mit ihrem unteren Ende auf der Brücke 42 abstützt, während sie andererseits mit ihrem oberen Ende an der Querplatte 45 angreift und diese so weit nach oben zu schieben sucht, daß die untere Querplatte 46 gegen die Unterseite der Brücke 42 zur Anlage kommt. Immer wenn dies der Fall ist, greift der Rastbolzen 38 in die Rastbohrung 39 der Schneckenwelle 31 ein und sichert diese dadurch gegen eine unerwünschte Relativdrehung gegenüber dem Schneckenzylinder 4. Das ist immer dann der Fall, wenn der Schneckenzylinder 4 nicht in die Spritzgießmaschine 1 eingebaut ist bzw. wenn er zusammen mit dem Kühlblock aus der in den Fig. 1 und 2 gezeigten Einbaulage innerhalb des Abstandsbereichs 8 gegenüber der Quertraverse 6 abgesenkt wird.

Damit jedoch die Rastkupplung 37 zwangsläufig außer Eingriff kommt, sobald der Schneckenzylinder seine ordnungsgemäße Einbaulage in der Spritzgießmaschine 1 einnimmt, ist am hinteren Ende der Quertraverse 6, und zwar an deren Unterseite ein Anschlagblock 48 angeordnet, gegen den die obere Querplatte 45 anläuft. Sie wird dabei entgegen der Kraftwirkung der beiden Druckfedern 47 unter der Führungswirkung der Bolzen 44 relativ zur Brücke 42 nach abwärts geschoben, so daß auch die Querplatte 46 mit dem Rastbolzen 38 nach unten von der Brücke 42 abhebt damit der Rastbolzen 38 aus der Rastbohrung 39 in der Schneckenwelle 31 ausrückt, wie das in den Fig. 5 und 6 der Zeichnung zu sehen ist.

Wie sich bereits aus den vorstehend gemachten Darlegungen ergibt, wird der Ein- und Ausbau des Schneckenzylinders 4 mit dem ihn umgebenden Kühlblock 11 in besonders vorteilhafter Weise von unten her durchgeführt. Deshalb ist im Grundgestell 2 der Spritzgießmaschine 1 unterhalb der Spritzzylinder 3a und 3b sowie des Schneckenzylinders 4 ein Lichtraum 49 vorhanden, in welchen die Schneckenzylinder 4 mit den Kühlblöcken 11 für den Wechselvorgang eingebracht werden können.

Die freie Höhe dieses Lichtraumes 49 entspricht dabei mindestens der größten Bauhöhe eines mit einem Kühlblock 11 vereinigten Schneckenzylinders 4. Vorzugsweise ist die freie Höhe des Lichtraumes 49 jedoch um einiges größer als diese maximale Bauhöhe ausgelegt.

Zum Anheben und Absenken des Schneckenzylinders 4 mit dem zugehörigen Kühlblock 11 dient ein Hubwerk 50, welches in das Grundgestell 2 der Spritzgießmaschine 1 intergriert ist. Beim gezeigten Ausführungsbeispiel arbeitet dieses Hubwerk 50 mit zwei parallelen Hubspindelaggregaten 51a und 51b, die einen gemeinsamen Antriebsmotor 52 haben und dadurch synchron betrieben werden. Beide Hubspindelaggregate 51a und 51b haben dabei eine gemeinsame Tragplattform 53, welche jeweils einen Schneckenzylinder 4 mit einem Kühlblock 11 aufnehmen kann, um diesen entweder von unten nach oben in die ordnungsgemäßen Einbaulage zu bringen, oder aber ihn aus der ordnungsgemäßen Einbaulage von oben nach unten abzusenken.

Damit Schneckenzylinder 4 und Kühlblock 11 auf der Tragplattform 53 während des Heb- und/oder Senkvorgangs lagengesichert sind, weisen sie jeweils nach unten vorstehende Ausricht- und Kupplungszapfen 54 auf, die in zugeordnete Eingriffsöffnungen an der Tragplattform 53 eintauchen können. Dabei haben die Ausricht- und Kupplungszapfen 54 jeweils Umfangseindrehungen 55, mit welchen von der Seite her Riegelschieber 56 durch einen Stellantrieb 57, bspw. einen Druckmittelzylinder in Eingriff gebracht werden können.

Die Stellantriebe 57 für die Riegelschieber 56 können dabei so gesteuert werden, daß ein Ausrücken der Riegelschieber 56 erst stattfindet, wenn das Hubwerk 50 seine obere oder seine untere Endstellung erreicht hat. Zur Steuerung der Stellantriebe 57 für die Riegelschieber 56 kann dabei ein Meßmeßsystem 58 genutzt werden, welches dem Hubwerk 50 im Grundgestell 2 der Spritzgießmaschine 1 zugeordnet ist.

Eine weitere Ausgestaltung der Wechselvorrichtung für die Schneckenzylinder 4 der Spritzgießmaschine 1 ist insbesondere aus Fig. 2 ersichtlich. Hiernach ist nämlich innerhalb des Lichtraumes 49 oberhalb des Grundgestells 2 ein Lagermagazin 59 vorgesehen, welches nebeneinaner mindestens Lagerplätze 60a und 60b für zwei Schneckenzylinder 4 mit zugehörigem Kühlblock 11 aufweist. Dabei ist das Lagermagazin 59 so ausgeführt, daß diese Lagerplätze 60a und 60b sich abwechselnd in den Wirkbereich des Hubwerkes 50 sowie unter den Freiraum bzw. die Ausricht-Aufnahme im Abstandsbereich 8 zwischen den Rahmenkörpern 5a und 5b stellen lassen. Gemäß Fig. 2 befindet sich bspw. der Lagerplatz 60 des Lagermagazins 59 in der betreffenden Einstellage.

Das Lagermagazin 59 weist einen mittleren Längsträger 61 sowie zwei an verschiedenen Seiten desselben und mit Abstand davon angeordnete Längswangen 62a und 62b auf. Die Längswangen 62a und 62b sind dabei miteinander und auch mit dem mittleren Längsträger 61 durch Querrohre 63 fest verbunden. Jedes dieser Querrohre 63 wird dabei konzentrisch von einem Querholm 64 durchsetzt, der fest im Grundgestell 2 montiert ist und sich über dessen gesamte Breite erstreckt. Jedes Querrohr 63 ist dabei auf seinem Querholm 64 über Führungsbuchsen 65 begrenzt verfahrnbar gehalten, wobei der Fahrantrieb von einem Druckmittelzylinder 66 gebildet wird, dessen Kolbenstange am mittleren Längsträger 61 angreift.

Zwischen dem mittleren Längsträger 61 und der linken Längswange 62a wird der Lagerplatz 60a gebildet, während zwischen der mittleren Längswange 61 und der rechten Längswange 62b der Lagerplatz 60b vorgesehen ist.

Damit jeder Schneckenzylinder 4 zusammen mit dem zugehörigen Kühlblock 11 sicher in den Lagerplätzen 60a und 60b des Lagermagazins 59 abgesetzt werden kann, ist er mit seitlich auskragenden Stützgliedern, bspw. Rollen 67, versehen, wobei diese Rollen 67 an der einen Seite auf dem mittleren Längsträger 61 und an der gegenüberliegenden Seite entweder auf der Längswange 62a oder aber auf der Längswange 62b zur Stützauflage kommen, wie das in den Fig. 1 und 2 angedeutet ist.

Aus Fig. 1 geht dabei noch hervor, daß sowohl der mittlere Längsträger 61 als auch die beiden Längswangen 62a und 62b sich nahezu über die ganze Länge des Grundgestells 2 der Spritzgießmaschine 1 erstrecken. Sie machen es daher möglich, die verschiedenen Schneckenzylinder 4 mit ihren zugehörigen Kühlblöcken 11 von den Stirnseiten der Spritzgießmaschine 1 aus in das Lagermagazin 59 bzw. dessen Lagerplätze 60a und 60b einzufahren.

In Fig. 1 ist dabei ein Aufbau gezeigt, bei dem das Ein- und Ausfahren der Schneckenzylinder 4 mit den Kühlblöcken 11 von der rechten Stirnseite der Spritzgießmaschine 1 her vorgenommen wird. Die ordnungsgemäße Positionierung der Schneckenzylinder 4 und Kühlblöcke 11 in Längsrichtung des Lagermagazins 59 bzw. der Lagerplätze 60a und 60b wird dabei durch Rastvorrichtungen 68 fixiert, welche bspw. mit den Rollen 67 in Wirkverbindung treten können, wie das in Fig. 1 bspw. angedeutet ist.

Diese exakte Längspositionierung der Schneckenzylinder 4 und Kühlblöcke 11 im Lagermagazin 59 bzw. in dessen Lagerplätzen 60a und 60b ist dabei nicht nur für den ordnungsgemäßen und zielsicheren Wechselvorgang innerhalb des Abstandsbereich 8 zwischen den Rahmenkörpern 5a und 5b der beiden Spritzzylinder 3a und 3b notwendig, sondern auch besonders vorteilhaft, wenn die in den Lagerplätzen 60a und 60b befindlichen Schneckenzylinder 4 und Kühlblöcke 11 mit dort befindlichen Heizenergie-Zuführungen bzw. Kühlenergie-Zuführungen in Wirkverbindung gelangen sollen, um sicherzustellen, daß der jeweilige Schneckenzylinder 4 und Kühlblock 11 bei der Durchführung eines Wechselvorgangs bereits die für den Spritzvorgang erforderliche Arbeitstemperatur aufweisen.

**Patentansprüche**

1. Wechselvorrichtubng für den Schneckenzylinder (4) einer Spritzgießmaschine (1), bei welcher die Schnecke des Schnekkenzylinders (4) mit der maschinenseitigen Antriebseinheit in lösbarer Kupplungsverbindung steht und dabei der Schneckenzylinder (4) samt Schnecke zum Lösen und Ausrücken der Kupplungsverbindung im wesentlichen quer zu seiner Längsrichtung relativ zur Spritzgießmaschine (1) verlagerbar ist, bei welcher symmetrisch und parallelachsig zur Längsmittelebene (9-9) der Spritzgießmaschine (1) zwei Hydraulik-Zylinder (3a, 3b) mit Abstand (8) nebeneinander angeordnet sind, die durch eine Quertraverse (6) miteinander in Verbindung stehen, wobei von den beiden Hydraulikzylindern (3a, 3b) und der Quertraverse (6) ein sich an die Antriebseinheit nach vorne anschließender Freiraum begrenzt ist, und bei welcher dieser Freiraum eine sowohl nach vorne und nach hinten als auch an einer Längsseite offene Ausricht-Aufnahme bildet, in der der Schneckenzylinder (4) in seiner Kupplungsstellung mit der Antriebseinheit fixierbar und/oder verriegelbar ist, **dadurch gekennzeichnet,** daß der Freiraum (8) bzw. die Ausricht-Aufnahme nach unten offen ist, also die die Hydraulik-Zylinder (3a und 3b) miteinander verbindende Quertraverse (6) an der oberen Längsseite der Hydraulikzylinder (3a, 3b) angreift (5a, 5b).

2. Wechselvorrichung nach Anspruch 1, **dadurch gekennzeichnet,** daß das hintere Ende des Schneckenzylinders (4) von einem Kühlblock (11) umgeben ist, der eine den Freiraum (8) bzw. der Ausricht-Aufnahme angepaßte, prismatische Umrißform aufweist.

3. Wechselvorrichtung nach einem der Ansprüche 1 und 2, **dadurch gekennzeichnet,** daß die Spritzgießmaschine (1) unterhalb der Hydraulik-Zylinder (3a, 3b) und des Schneckenzylinders (4) in ihrem Grundgestell (2) einen Lichtraum (49) aufweist, dessen freie Höhe mindestens der größten Bauhöhe eines mit einem Kühlblock (11) vereinigten Schneckenzylinder (4) entspricht, und daß im Grundgestell (2) ein Hubwerk (50) untergebracht ist, mittels dessen jeder Schneckenzylinder (4) samt Kühlblock (11) zwischen dem Lichtraum (49) und dem Freiraum (8) bzw. der Ausricht-Aufnahme innerhalb der Spritzgießmaschine (1) höhenverlagerbar ist (Fig. 1 und 2).

4. Wechselvorrichtung nach einem der Ansprüche 1 bis 3, **dadurch gekennzeichnet,** daß im Lichtaum (49) oberhalb des Grundgestells (2) ein Lagermagazin (59) vorgesehen ist, welches nebeneinander mindestens Lagerplätze (60a, 60b) für zwei Schneckenzylinder (4) mit Kühlblock (11) aufweist, wobei diese Lagerplätze (60a, 60b) abwechselnd in den Wirkbereich des Hubwerkes (50) und unter den Freiraum (8) bzw. die Ausricht-Aufnahme stellbar sind (Fig. 2).

5. Wechselvorrichtung nach einem der Ansprüche 3 und 4, **dadurch gekennzeichnet,** daß das Lagermagazin (59) aus einem mittleren Längsträger (61) und zwei seitlichen Längswangen (62a, 62b) sowie diese miteinander auf vorbestimmten Abstand verbindenden Querrohren (63) besteht, wobei die Querrohre (63) über Führungsbuchsen (65) begrenzt verfahrbar auf vom Grundgestell (2) getragenen Querholmen (64) lagern und das Lagermagazin (5) über Druckmittelzylinder (66) zwischen zwei Endstellungen im Grundgestell (2) quer verfahrbar ist (Fig. 2).

6. Wechselvorrichtung nach einem der Ansprüche 3 bis 5, **dadurch gekennzeichnet,** daß die Schneckenzylinder (4) mittels seitlichen Stützgliedern z.B. Rollen (67), jeweils auf den mittleren Längsträger (61) und einer seitlichen Längswange (62a bzw. 62b) absetzbar sowie auf diesen in Längsrichtung verfahrbar sind, wobei die Schneckenzylinder (4) in einer vorgegebenen Längsposition relativ zum Längsträger (61) und zu den Längswangen (62a, 62b) fixierbar sind (68; Fig. 1).

7. Wechselvorrichtung nach einem der Ansprüche 3 bis 6, **dadurch gekennzeichnet,** daß das Hubwerk (50) eine Tragplattform (53) für einen Schneckenzylinder (4) aufweist, daß die Tragplattform (53) mit Eingriffsöffnungen für an den Schneckenzylindern (4) befindliche Ausricht- und Kupplungszapfen (54) versehen ist, und daß sich an der Tragplattform (53) eine Kupplungsvorrichtung (56) zum Festlegen der Ausricht- und Kupplungszapfen (54) befindet.

8. Wechselvorrichtung nach einem der Ansprüche 3 bis 7, **dadurch gekennzeichnet,** daß das Lagermagazin (59) für jeden Schneckenzylinder (4) Kupplungsmittel zur Heizenergie-Zuführung sowie auch für jeden Kühlblock (11) Kupplungsmittel zur Kühlenergie-Zuführung aufweist.

9. Wechselvorrichtung nach einem der Ansprüche 1 bis 3, **dadurch gekennzeichnet,** daß einerseits im Freiraum (8) bzw. in der Ausricht-Aufnahme und andererseits am Kühlblock (11) des Schneckenzylinders (4) quer zu dessen Längsachse gerichtete, formschlüssig ineinandergreifende Paßführungen (15, 17) vorgesehen und diesen zusätzliche Riegelelemente (16, 16b und 22, 25, 26) zugeordnet sind (Fig. 3 und 4).

10. Wechselvorrichtung nach Anspruch 9,
**dadurch gekennzeichnet,**
daß die Paßführungen (15, 17) und die Riegelelemente (16, 16b und 22, 25, 26) lediglich einseitig vorgesehen sind (Fig. 2).

11. Wechselvorrichtung nach einem der Ansprüche 9 und 10,
**dadurch gekennzeichnet,**
daß als Riegelelemente eine im Querschnitt T-förmige Nut (16, 16a, 16b, 16c) am Kühlblock (11) und ein an einem Hydraulik-Zylinder (3a) verschiebbar geführter (5a) Kopfbolzen (22, 25, 26, 27, 28) miteinander in Wirkverbindung treten (Fig. 3 und 4).

12. Wechselvorrichtung nach einem der Ansprüche 9 bis 11,
**dadurch gekennzeichnet,**
daß der Kopfbolzen (22) unterhalb seines Kopfes (25) einen Bund (26) aufweist, der als Riegelglied in eine angepaßte Erweiterung (16b) der T-förmigen Nut (16) am Kühblock (11) einrückbar ist (Fig. 3 und 4).

13. Wechselvorrichtung nach einem der Ansprüche 9 bis 12,
**dadurch gekennzeichnet,**
daß der Kopfbolzen (22) in Spannrichtung unter der Wirkung von Federelementen (29) steht, während er in Freigaberichtung durch einen Druckmittelzylinder (23, 24) beaufschlagbar ist (Fig. 4).

14. Wechselvorrichtung nach einem der Ansprüche 1 bis 13, bei welcher das hintere Ende der Schneckenwelle des Schneckenzylinders mit der Welle der Antriebseinheit durch quer zu ihrer Längsachse hin und außer Kupplungseingriff schiebbare Mitnehmerklauen z.B. von T-förmiger und C-förmiger Gestalt, in lösbarer Antriebsverbindung bringbar sind,
**dadurch gekennzeichnet,**
daß die Mitnehmerklaue (36) der Welle (32) der Antriebseinheit (33) relativ zu deren Gehäuse sowie die Mitnehmerklaue (34) der Schneckenwelle (31) relativ zum Schneckenzylinder (4) in einer vorbestimmten, der offenen Längsseite des Freiraumes (8) bzw. der Ausricht-Aufnahme zugeordneten Drehwinkelstellung stillsetzbar und/oder feststellbar sind.

15. Wechselvorrichtung nach Anspruch 14,
**dadurch gekennzeichnet,**
daß die Drehwinkelstellung der Welle (32) der Antriebseinheit (33) durch elektrische Abtastung und Bremsung festlegbar ist, während zwischen der Schneckenwelle (31) und dem Schneckenzylinder (4) eine im Sperrsinne federbelastete (47) mechanische Rastkupplung (37) sitzt, die entgegen der Federkraft (47) bei im Freiraum (8) bzw. in der Ausricht-Aufnahme fixiertem und/oder verriegeltem Schneckenzylinder (4) ausgerückt ist (48; Fig. 5 und 6).

16. Wechselvorrichtung nach Anspruch 15,
**dadurch gekennzeichnet,**
daß die Rastkupplung (37) aus einem am Schneckenzylinder (4) quer zu dessen Längsachse (10) verschiebbar geführten, durch Federelemente (47) in Richtung auf die Längsachse (10) zu vorgespannten Rastbolzen (38) und einer diesem zugeordneten radialen Rastbohrung (39) in der Schneckenwelle (31) besteht, wobei der Rastbolzen (38) durch einen Ausrückanschlag (48) im Bereich des Freiraumes (8) bzw. der Ausricht-Aufnahme für den Schneckenzylinder (4) aus der Rastbohrung (39) verdrängbar ist (Fig. 5 und 6).

**Claims**

1. Changing device for the worm cylinder (4) of an injection-moulding machine (1), in which the worm of the worm cylinder (4) stands in disengageable coupling connection with the drive unit at the machine side and the worm cylinder (4) together with worm is in that case displaceable substantially transversely to its longitudinal direction relative to the injection-moulding machine (1) for the undoing and disengaging of the coupling connection, in which two hydraulic cylinders (3a, 3b) are arranged one beside the other at a spacing (8) symmetrically to and parallelly with the axis of the longitudinal centre plane (9-9) of the injection-moulding machine (1) and stand in connection one with the other through a crossbeam (6), wherein a free space adjoining the drive unit at the front is bounded by both the hydraulic cylinders (3a, 3b) and the crossbeam (6) and in which this free space forms an orienting receptacle, which is open to the front and to the rear as well as also at a longitudinal side and in which the worm cylinder (4) in its coupled setting is fixable and/or latchable to the drive unit, characterised thereby, that the free space (8) or the orienting receptacle is open downwardly thus engaging (5a, 5b) the crossbeam (6), which connects the hydraulic cylinders (3a, 3b) one with the other at the upper longitudinal side of the hydraulic cylinders (3a, 3b).

2. Changing device according to claim 1, characterised thereby, that the rear end of the worm cylinder (4) is surrounded by a cooling block (11), which displays a prismatic outline shape matched to the free space (8) or the orienting receptacle.

3. Changing device according to one of the claims 1 and 2, characterised thereby, that the injection-moulding machine (1) in its base frame (2) underneath the hydraulic cylinders (3a, 3b) and the worm cylinder (4) displays a clear space (49), the free height of which corresponds to at least the greatest overall height of a worm cylinder (4) united with a cooling block (11) and that a lifting mechanism (50), by means of which each worm cylinder (4) together with the cooling block (11) is displaceable vertically within the injection-moulding machine (1) between the clear space (49) and the free space (8) or the orienting receptacle, is accommodated in the base frame (2) (Figures 1 and 2).

4. Changing device according to one of the claims 1 to 3, characterised thereby, that a bearing magazine (59), which at least displays bearing places (60a, 60b) one beside the other for two worm cylinders (4) with cooling block (11), is provided in the clear space (49) above the base frame (2), wherein these bearing places (60a, 60b) are settable alternatingly into the effective range of the lifting mechanism (50) and below the free space (8) or the orienting receptacle (Figure 2).

5. Changing device according to one of the claims 3 and 4, characterised thereby, that the bearing magazine (59) consists of a central longitudinal carrier (61) and two lateral longitudinal cheeks (62a, 62b) as well as of transverse tubes (63) connecting these one with the other at a predetermined spacing, wherein the transverse tubes (63) are borne on transverse stays (64) carried by the base frame (2) to be movable limitedly by way of guide bushes (65) and the bearing magazine (59) is movable transversely between two end settings in the base frame (2) by way of pressure medium cylinders (66) (Figure 2).

6. Changing device according to one of the claims 3 to 5, characterised thereby, that the worm cylinders (4) are depositable respectively on the central longitudinal carrier (61) and a lateral longitudinal cheek (62a or 62b) as well as movable on these in longitudinal direction by means of lateral support members, for example rollers (67), wherein the worm cylinders (4) are fixable in a preset longitudinal position relative to the longitudinal carrier (61) and to the longitudinal cheeks (62a, 62b)(68; Figure 1).

7. Changing device according to one of the claims 3 to 6, characterised thereby, that the lifting mechanism (50) displays a carrier platform (53) for a worm cylinder (4), that the carrier platform (53) is provided with engagement openings for orienting and coupling spigots (54) disposed at the worm cylinders (4) and that a coupling device (56) for the fixing of the orienting and coupling spigots (54) is disposed at the carrier platform (53).

8. Changing device according to one of the claims 3 to 7, characterised thereby, that the bearing magazine (59) displays coupling means for the feed of heating energy to each worm cylinder (4) as well as coupling means for the feed of cooling energy to each cooling block (11).

9. Changing device according to one of the claims 1 to 3, characterised thereby, that shape-lockingly interengaging fitting guides (15, 17) are provided on the one hand in the free space (8) of the orienting receptacle and on the other hand at the cooling block (11), are oriented transversely to its longitudinal axis and are associated with additional latching elements (16, 16b and 22, 25, 26) (Figures 3 and 4).

10. Changing device according to claim 9, characterised thereby, that the fitting guides (15, 17) and the latching elements (16, 16b and 22, 25, 26) are provided merely at one side (Figure 2).

11. Changing device according to one of the claims 9 and 10, characterised thereby, that a groove (16, 16a, 16b, 16c), which is T-shaped in cross-section, at the cooling block (11) and a setbolt (22, 25, 26, 27, 28), which is guided to be displaceable at a hydraulic cylinder (3a), come into effective connection one with the other as latching elements (Figures 3 and 4).

12. Changing device according to one of the claims 9 to 11, characterised thereby, that the setbolt (22) underneath its head (25) displays a collar (26), which is movable as latching member into a matched enlargement (16b) of the T-shaped groove (16) at the cooling block (11) (Figures 3 and 4).

13. Changing device according to one of the claims 9 to 12, characterised thereby, that the setbolt (22) stands under the effect of spring elements (29) in tightening direction, whilst it is lodable by a pressure medium cylinder (23, 24) in release direction (Figure 4).

14. Changing device according to one of the claims 1 to 13, in which the rear end of the worm shaft of the worm cylinder is bringable into disengageable driving connection with the shaft of the drive unit by entraining claws, which are slidable transversely to their longitudinal axis into and out of coupling engagement and for example of T-shaped and C-shaped structure, characterised thereby, that the entraining claw (36) of the shaft (32) of the drive unit (33) is stoppable and/fixable relative to its housing as well as the entraining claw (34) of the worm shaft (31) is stoppable and/fixable relative to the worm cylinder (4) each in a predetermined angular setting associated with the open longitudinal side of the free space (8) of the orienting receptacle.

15. Changing device according to claim 14, characterised thereby, that the angular setting of the shaft (32) of the drive unit (33) is fixable by electrical scanning and braking, whilst a mechanical detent coupling (37), which is spring-loaded (47) in the blocking sense and moved out against the spring force (47) when the worm cylinder (4) is fixed and/or latched in the free space (8) or the orienting receptacle, sits between the worm shaft (31) and the worm cylinder (4) (48; Figures 5 and 6).

16. Changing device according to claim 15, characterised thereby, that the detent coupling (37) consists of a detent bolt (38), which is guided at the worm cylinder (4) to be displaceable transversely to its longitudinal axis (10) and biassed by spring elements (47) in the direction of the longitudinal axis (10), and a radial detent bore (39) associated therewith in the worm shaft (31), wherein the detent bolt (38) is displaceable out of the detent bore (39) by a release abutment (48) in the region of the free space (8) or the orienting receptacle for the worm cylinder (4) (Figures 5 and 6).

## Revendications

1. Dispositif de changement du cylindre (4) à vis sans fin d'une machine de moulage par injection (1) dans laquelle la vis sans fin du cylindre (4) à vis sans fin est accouplée d'une manière amovible à l'unité de commande située sur le côté de la machine, le cylindre (4) à vis sans fin et la vis sans fin pouvant, pour la séparation et l'enlèvement du dispositif d'accouplement, être déplacés, essentiellement transversalement par rapport à la direction longitudinale du cylindre, par rapport à la machine de moulage par injection (1), dans laquelle deux vérins hydrauliques (3a, 3b) d'axes parallèles et symétriques par rapport au plan médian longitudinal (9 - 9) de la machine de moulage par injection (1) et situés à une certaine distance (8) l'un à côté de l'autre sont reliés l'un à l'autre par une traverse (6), ces deux vérins hydrauliques (3a, 3b) et la traverse (6) délimitant un espace libre qui se raccorde vers l'avant à l'unité de commande, et dans laquelle cet espace libre constitue une zone de réception et de positionnement qui est ouverte aussi bien vers l'avant que vers l'arrière que sur l'un de ses côtés longitudinaux et dans laquelle le cylindre (4) à vis sans fin peut, dans sa position d'accouplement, être fixé et/ou verrouillé à l'unité de commande, caractérisé en ce que l'espace libre (8) ou zone de réception et de positionnement est ouvert vers le bas, de sorte que la traverse (6) qui relie l'un à l'autre les vérins hydrauliques (3a et 3b) agit sur le côté longitudinal supérieur des vérins hydrauliques (3a, 3b).

2. Dispositif de changement selon la revendication 1, caractérisé en ce que l'extrémité arrière du cylindre (4) à vis sans fin est entourée par un bloc de refroidissement (11) qui présente un contour prismatique adapté à l'espace libre ou zone de réception et de positionnement.

3. Dispositif de changement selon l'une des revendications 1 ou 2, caractérisé en ce qu'au-dessous des vérins hydrauliques (3a, 3b) et du cylindre (4) à vis sans fin la machine de moulage par injection (1) comporte, dans son socle (2), un espace vide (49) dont la hauteur intérieure est au moins égale à la hauteur maximale d'un cylindre (4) à vis sans fin associé à un bloc de refroidissement (11) et en ce que le socle (2) comprend un dispositif de levage (50) qui permet le réglage en hauteur de chaque cylindre (4) à vis sans fin et du bloc de refroidissement (11) entre l'espace vide (49) et l'espace libre (8) ou zone de réception et de positionnement, à l'intérieur de la machine de moulage par injection (1).

4. Dispositif de changement selon une des revendications 1 à 3, caractérisé en ce que l'espace vide (49) comprend, au-dessus du socle (2), un magasin (59) qui comporte, l'un à côté de l'autre, des emplacement d'entreposage (60a, 60b) pour au moins deux cylindres (4) à vis sans fin et pour le bloc de refroidissement (11), ces emplacements d'entreposage (60a, 60b) pouvant être placés alternativement dans la zone d'action du dispositif de levage (50) et sous l'espace libre (8) ou zone de réception et de positionnement.

5. Dispositif de changement selon l'une des revendications 3 ou 4, caractérisé en ce que le magasin (59) est constitué par une poutrelle longitudinale médiane (61) et deux poutrelles longitudinales latérales (62a, 62b) ainsi que par des tubes transversaux (63) qui relient ces poutrelles les unes aux autres à une certaine distance les unes des autres, ces tubes transversaux (63) étant posés, de manière à pouvoir être déplacés dans certaines limites, par l'intermédiaire de boîtes de guidage (65), sur des longerons transversaux (64) portés par le socle et le magasin (59) pouvant être déplacé transversalement, par l'intermédiaire de vérins à milieu de pression (66), entre deux positions d'extrémité dans le socle (2) (Figure 2).

6. Dispositif de changement selon une des revendications 3 à 5, caractérisé en ce que les cylindres (4) à vis sans fin peuvent être, au moyen d'organes d'appui latéraux, par exemple de rouleaux (67), abaissée sur les poutrelles longitudinales médianes (61) et sur une plaque longitudinale latérale (62a ou 62b) et peuvent y être déplacées dans le sens longitudinal, les cylindres (4) à vis sans fin pouvant être fixés dans une position longitudinale déterminée par rapport aux poutrelles longitudinales (61) et aux plaques longitudinales (62a, 62b) (68; Figure 1).

7. Dispositif de changement selon une des revendications 3 à 6, caractérisé en ce que le dispositif de levage (50) comporte une plate-forme de support (53) pour un cylindre (4) à vis sans fin, en ce que cette plate-forme de support (53) comporte des ouvertures pour l'engagement de tenons de positionnement (54) qui se trouvent sur les cylindres (4) à vis sans fin et en ce que la plate-forme de support (53) comporte, monté sur elle, un dispositif d'accouplement (56) pour la fixation des tenons de positionnement et d'accouplement (54).

8. Dispositif de changement selon une des revendication 3 à 7, caractérisé en ce que le magasin (59) comporte, pour chaque cylindre (4) à vis sans fin, des dispositifs d'accouplement pour l'apport d'énergie de chauffage ainsi que, pour chaque bloc de refroidissement (11), des dispositifs d'accouplement pour l'apport d'énergie de refroidissement.

9. Dispositif de changement selon une des revendications 1 à 3, caractérisé en ce qu'il comporte, d'une part, dans l'espace libre (8) ou zone de réception et de positionnement et, d'autre part, au niveau du bloc de refroidissement (11) du cylindre (5) à vis sans fin, des dispositifs de guidage ajustés (15, 17) orientés transversalement par rapport à son axe longitudinal et s'engageant les uns dans les autres avec adaptation des formes et des éléments de verrouillage (16, 16b, et 20, 25, 26) qui les complètent (Figures 3 et 4°.

10. Dispositif de changement selon la revendication 9, caractérisé en ce que les dispositifs de guidage ajustés (15, 17) et les éléments de verrouillage (16, 16b et 22, 25, 26) ne se trouvent que d'un côté (Figures 2).

11. Dispositif de changement selon l'une des revendications 9 ou 10, caractérisé en ce que les éléments de verrouillage sont constitués par une rainure (16, 16a, 16b, 16c) ménagée dans le bloc de refroidissement (11) et ayant une section en forme de T et par un boulon à tête (22, 25, 26, 27, 28) qui est guidé (5a) de manière à pouvoir se déplacer avec un vérin hydraulique (3a) et coopère avec la rainure (Figures 3 et 4).

12. Dispositif de changement selon l'une des revendications 9 à 11, caractérisé en ce que le boulon à tête (22) comporte, au-dessous de sa tête (24), un bourrelet (26) qui constitue un organe annulaire pouvant s'engager dans une partie élargie ajustée (16b) de la rainure (16) en forme de T ménagée dans le bloc de refroidissement (11) (Figures 3 et 4).

13. Dispositif de changement selon une des revendications 9 à 12, caractérisé en ce que le boulon à tête (22) est, dans le sens de serrage, soumis à l'action d'éléments élastiques (29) tandis que, dans le sens du dégagement, il est soumis à l'action d'un vérin (23, 24) à milieu de pression (Figure 4).

14. Dispositif de changement selon une des revendications 1 à 13, dans lequel l'extrémité arrière de l'arbre hélicoidal du cylindre à vis sans fin peut être reliée d'une manière amovible à l'arbre de l'unité de commande par des griffes d'entraînement qui peuvent être déplacées transversalement par rapport à leur axe longitudinal de manière à être désaccouplées, et ayant une forme en T ou en C, caractérisé en ce que la grille d'entraînement (36) de l'arbre (32) de l'unité de commande (33) ainsi que la grille d'entraînement (34) de l'arbre de vis sans fin (31) peuvent être arrêtées et/ou fixées, la première par rapport à son enveloppe et la deuxième par rapport au cylindre (4) à vis sans fin, dans une position de rotation déterminée correspondant au côté longitudinal ouvert de l'espace libre (8) ou zone de réception et de positionnement.

**15.** Dispositif de changement selon la revendication 14, caractérisé en ce que la position angulaire de pivotement de l'arbre (32) de l'unité de commande (33) peut être fixée par exploration électrique et freinage, tandis que le dispositif comporte, entre l'arbre (31) de la vis sans fin et le cylindre (4) à vis sans fin, un accouplement d'arrêt mécanique (37) qui est soumis à une force élastique (47) tendant à la fermeture et qui, lorsque le cylindre (4) à vis sans fin est fixé et/ou verrouillé dans l'espace libre (8) ou zone de reception et de positionnement, est repoussé à l'extérieur (48; Figures 5 et 6) en opposition à la foree élastique (47).

**16.** Dispositif de changement selon la revendication 15, caractérisé en ce que l'accouplement d'arrêt (37) est constitué par un boulon d'arrêt (38) qui est guidé de manière à pouvoir se déplacer sur le cylindre (4) à vis sans fin transversalement par rapport à son axe longitudinal (10) et qui est soumis à une précontrainte dans le sens de l'axe longitudinal (10) par des éléments élastiques (47) et par un alésage d'arrêt radial correspondant (39) ménagé dans l'arbre 31 de vis sans fin, le boulon d'arrêt (38) pouvant être expulsé de l'alésage d'arrêt (39) par une butée d'éjection (48) au niveau de l'espace libre (8) ou zone de réception et de positionnement (Figures 5 et 6).

Fig.1

# Fig. 2

## Fig.3

## Fig. 4

Fig. 5

Fig. 6